# EUROPÄISCHE PATENTSCHRIFT

(11) **EP 4 358 391 B1**
(45) Veröffentlichungstag und Bekanntmachung des Hinweises auf die Patenterteilung: **26.08.2026**
(21) Anmeldenummer: 23200879.7
(22) Anmeldetag: 29.09.2023
(51) Int. Cl.: H02P 1/58, H02P 5/74, H02P 6/04, H02P 6/26, H02P 25/18

(54) **ANTRIEBSSYSTEM**
PROPULSION SYSTEM
SYSTÈME D'ENTRAÎNEMENT

(30) Priorität: 20.10.2022 BE 202205844
(43) Veröffentlichungstag der Anmeldung: 24.04.2024
(73) Patentinhaber: Miele & Cie. KG, 33332 Gütersloh (DE)
(72) Erfinder: Schaefer-van den Boom, Klaus, 53489 Sinzig (DE); Sammoud, Hafedh, 8090 Kelibia (TN); Rech, Thomas, 53881 Euskirchen (DE); Lintelmann, Horst, 32312 Lübbecke (DE); Berends, Erik, 33729 Bielefeld (DE)

(56) Entgegenhaltungen:
- JP-A- 2005 057 858
- JP-A- 2012 170 275
- US-A1- 2004 012 350
- US-A1- 2020 395 873
- US-A1- 2020 395 874
- KWON SUNKU ET AL: "Fault-Tolerant Operation Under Single-Phase Open in Mono Inverter Dual Parallel SMPMSM With Single Shaft", IEEE TRANSACTIONS ON POWER ELECTRONICS, INSTITUTE OF ELECTRICAL AND ELECTRONICS ENGINEERS, USA, vol. 34, no. 12, 1 December 2019 (2019-12-01), pages 12064 - 12079, XP011745362, ISSN: 0885-8993, [retrieved on 20190909], DOI: 10.1109/TPEL.2019.2906431

## Beschreibung

Die Erfindung betrifft ein Antriebssystem sowie ein Haushaltsgerät mit einem derartigen Antriebssystem.

Zu den bekannten elektrischen Motoren gehören auch die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Die Ausgangsspannung des Frequenzumrichters kann mittels Pulsweitenmodulation erfolgen. In jedem Fall kann vom Frequenzumrichter ein elektrisches Drehfeld mit variablen Spannungsamplituden und bzw. oder mit variabler Drehfrequenz erzeugt werden, was als feldorientierte Regelung bezeichnet werden kann. Dies kann das Drehverhalten des Synchronmotors z.B. beim Anlauf sowie in Abhängigkeit der anzutreibenden Last gezielt beeinflussen. Für mehrsträngige Permanentmagnet-Synchronmotoren ist ferner die Brushless-DC-Ansteuerung bekannt.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen gar nicht benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt ungeregelte Einphasen-Synchronmotoren als Antriebe z.B. von Laugenpumpen einzusetzen. Hierbei werden üblicherweise permanenterregte Einphasen-Synchronmotoren eingesetzt. Diese Motoren können auch mehrpolig ausgeführt sein, das bedeutet, dass sie eine Polpaarzahl > 1 aufweisen und damit die elektrische Frequenz über den Faktor p einem Vielfachen der mechanischen Drehzahl entspricht.

Wie bereits allgemein erwähnt ist es auch bei permanenterregten Einphasen-Synchronmotoren gegeben, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine Schalteinheit (Relais oder Triac) ausreichend, welche von einer Steuerungseinheit betrieben werden kann. Dies kommt insbesondere einfachen Anwendungen wie z.B. dem Einsatz von Laugenpumpen in Waschmaschinen zugute, welche ungeregelt mit konstanter Drehzahl betrieben werden.

Weiterhin ist eine Ansteuerung des Einphasen-Synchronmotors über eine H-Brücke möglich, welche von einer Steuerungseinheit betrieben werden kann.

Trotz des höheren Aufwands der Ansteuerung bei Dreiphasen-Synchronmotoren mittels eines Frequenzumrichters kann dieser Aufwand aufgrund der Vorteile gerechtfertigt sein, welche Dreiphasen-Synchronmotoren bieten können. Hierzu gehören neben einem konstanten Drehmomentenverlauf (keine "Null-Moment-Rotorpositionen") auch die hohe Dynamik, das hohe Drehmoment und die hohe Effizienz.

Wird in einem Gerät wie beispielsweise in einem Haushaltsgerät wenigstens ein geregelt betriebener Einphasen-Synchronmotor verwendet, beispielsweise in einer Waschmaschine für die Umflutpumpe und bzw. oder für die Laugenpumpe, so ist auch eine H-Brücke (Frequenzumrichter) und eine Steuerungseinheit für den Einphasen-Synchronmotor erforderlich. Wird ferner wenigstens ein Dreiphasen-Synchronmotor verwendet, so ist zusätzlich ein Frequenzumrichter erforderlich. Beides führt zu entsprechenden Herstellungskosten hinsichtlich Material- und Montageaufwand, erhöht den Platzbedarf im Gerät bzw. auf der Elektronik sowie den Stromverbrauch und bzw. oder die erzeugte Abwärme. Dies gilt ebenso für andere Einphasen- sowie Dreiphasen-Motoren.

KWON SUNKU ET AL: "Fault-Tolerant Operation Under Single-Phase Open in Mono Inverter Dual Parallel SMPMSM With Single Shaft",IEEE TRANSACTIONS ON POWER ELECTRONICS, INSTITUTE OF ELECTRICAL AND ELECTRONICS ENGINEERS, USA, Bd. 34, Nr. 12, 1. Dezember 2019 (2019-12-01), Seiten 12064-12079, XP011745362, ISSN: 0885-8993, DOI: 10.1109/ TPEL.2019.2906431 offenbart einen fehlertoleranten Betrieb eines Drehstrommotors, der nach einem Open-Fault einer Phase über zwei Wechselrichter-Halbbrücken betrieben und als Einphasenmotor gesteuert wird.

Der Erfindung stellt sich somit das Problem, ein Antriebssystem der eingangs beschriebenen Art bereitzustellen, welches wenigstens einen dreiphasigen Motor in Kombination mit wenigstens einem einphasigen Motor mit einem geringeren elektronischen bzw. schaltungstechnischen Aufwand als bisher bekannt betreiben kann. Dies soll vorzugweise gleichzeitig erfolgen können, d.h. ein einphasiger und ein dreiphasiger Motor sollen mit einem geringeren elektronischen bzw. schaltungstechnischen Aufwand als bisher bekannt parallel zueinander betrieben werden können. Dies soll insbesondere kostengünstig, bauraumsparend, energiesparend und bzw. oder mit einer geringen Abwärme erfolgen können. Zumindest soll eine Alternative zu bekannten derartigen Antriebssystemen geschaffen werden.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem Dreiphasen-Synchronmotor, und mit wenigstens einem Frequenzumrichter mit einer ersten Halbbrücke, einer zweiten Halbbrücke und einer dritten Halbbrücke, wobei der Frequenzumrichter ausgebildet ist, den Dreiphasen-Motor mittels aller drei Halbbrücken zu betreiben.

Das Antriebssystem ist dadurch gekennzeichnet, dass der Frequenzumrichter ferner ausgebildet ist, den Dreiphasen-Motor nur mittels der zweiten Halbbrücke und der dritten Halbbrücke zu betreiben. Somit kann die erste Halbbrücke des Frequenzumrichters gar nicht oder anderweitig verwendet werden, wenn der Dreiphasen-Motor nur mittels der zweiten Halbbrücke und der dritten Halbbrücke betrieben wird. Beispielsweise kann der Frequenzumrichter auf diese Art und Weise dazu verwendet werden, parallel, d.h. zeitgleich, ferner einen Einphasen-Motor zu betreiben, wie nachfolgend näher erläutert werden wird.

Das Antriebssystem ist ferner dadurch gekennzeichnet, dass der Frequenzumrichter ausgebildet ist, den Dreiphasen-Motor im Hochlauf mittels aller drei Halbbrücken zu betreiben und, nach Abschluss des Hochlaufs, den Dreiphasen-Motor nur mittels der zweiten Halbbrücke und der dritten Halbbrücke zu betreiben. Somit kann zunächst ein "normaler" Betrieb des Dreiphasen-Motors seitens des Frequenzumrichters erfolgen (mit einer Bestromung, die ein Drehfeld erzeugt), um diesen zumindest ausreichend in Gang zu versetzen bzw. auf Drehzahl zu bringen, so dass Winkellagen des Strom- oder Flussvektors des Dreiphasen-Motors, in denen ein Anlaufen des Dreiphasen-Motors mit lediglich nur zwei Phasen nicht möglich ist, vom bereits in Rotation versetzten Rotor überwunden werden können und somit die Rotation des Rotors des Dreiphasen-Motors nicht verhindern können.

Gemäß einem weiteren Aspekt der Erfindung erfolgt nach Abschluss des Hochlaufs des Dreiphasen-Motors mittels aller drei Halbbrücken und vor dem Betreiben des Dreiphasen-Motors nur mittels der zweiten Halbbrücke und der dritten Halbbrücke ein Betreiben des Dreiphasen-Motors mittels aller drei Halbbrücken mit einer geringeren Spannung des Frequenzumrichters als beim Hochlauf, unmittelbar nach dem Hochlauf oder im Nennbetrieb des Dreiphasen-Motors mittels aller drei Halbbrücken. So kann der Dreiphasen-Motor im noch dreiphasigen Betrieb in einen Drehzustand versetzt werden, welcher etwa dem Dreh- bzw. Betriebszustand entspricht, welcher von den beiden verbleibenden Phasen umgesetzt wird. Dies kann den Übergang vom dreiphasigen Betrieb in den zweiphasigen Betrieb des Dreiphasen-Motors vereinfachen bzw. "glatter" gestalten.

Gemäß einem weiteren Aspekt der Erfindung liegt der Abschluss des Hochlaufs vor, falls wenigstens eine vorbestimmte Drehzahl oder eine vorbestimmte Drehgeschwindigkeit des Dreiphasen-Motors erreicht oder eine vorbestimmte Zeitdauer überschritten ist. Dies kann jeweils sicherstellen, dass die Rotation des Rotors des Dreiphasen-Motors ausreichend schnell erfolgt, um die besagten Winkellagen des Strom- oder Flussvektors zu überwinden.

Grundsätzlich können auch andere Parameter herangezogen werden, um den Abschluss des Hochlaufs zu kennzeichnen.

Gemäß einem weiteren Aspekt der Erfindung weist das Antriebssystem ferner wenigstens einen Einphasen-Motor, vorzugsweise einen Einphasen-Synchronmotor, auf, wobei der Frequenzumrichter ferner ausgebildet ist, den Einphasen-Motor mittels der ersten Halbbrücke und der dritten Halbbrücke alternativ oder zusätzlich zum Dreiphasen-Motor zu betreiben, wobei die erste Halbbrücke mittels eines Umschalters, vorzugsweise mittels eines UmschaltRelais, zwischen dem Dreiphasen-Motor und dem Einphasen-Motor umgeschaltet werden kann und wobei die dritte Halbbrücke sowohl mit dem Dreiphasen-Motor und als auch mit dem Einphasen-Motor verbunden ist. Der Dreiphasen-Motor kann ein Hauptantrieb des Antriebssystems und der Einphasen-Motor ein Hilfsantrieb des Antriebssystems sein.

Mit anderen Worten kann mittels des Frequenzumrichters zum einen mittels aller drei Halbbrücken der Dreiphasen-Motor wie bisher bekannt betrieben und dabei die Vorteile eines Frequenzumrichters zum Betreiben eines elektrischen Dreiphasen-Motors genutzt werden. Zusätzlich kann derselbe Frequenzumrichter auch für den Betrieb eines weiteren elektrischen Einphasen-Motors verwendet werden, um eine zusätzliche elektronische Schaltung zu dessen Betrieb einzusparen bzw. zu vermeiden. Gleichzeitig kann auf diese Art und Weise auch der Einphasen-Motor mittels eines Frequenzumrichters betrieben und entsprechend dessen Vorteile auch dort genutzt werden. Dies kann den schaltungstechnischen Aufwand entsprechend reduzieren, um zwei elektrische Motoren betreiben zu können, da der Frequenzumrichter zusätzlich, wie zuvor bereits beschrieben, oder auch alternativ doppelt verwendet werden kann. Dies kann die Kosten hinsichtlich des Materials und der Montage ebenso reduzieren wie den Platzbedarf, den Energieverbrauch und bzw. oder die Wärmeerzeugung. Dies mittels eines Umschalters der ersten Halbbrücke umzusetzen, kann insbesondere den schaltungstechnischen Aufwand minimieren.

Gemäß einem weiteren Aspekt der Erfindung erfolgt ein zusätzliches Betreiben vom Einphasen-Motor zum Dreiphasen-Motor erst bei Betreiben des Dreiphasen-Motors nur mittels der zweiten Halbbrücke und der dritten Halbbrücke. Dies kann den Übergang zwischen den beiden Betriebsarten des Dreiphasen-Motors wie zuvor beschrieben gewährleisten.

Gemäß einem weiteren Aspekt der Erfindung ist die zweite Halbbrücke nur mit dem Dreiphasen-Motor verbunden. Dies kann eine konkrete Umsetzung darstellen.

Gemäß einem weiteren Aspekt der Erfindung entspricht die Ruhestellung des Umschalters, vorzugsweise des Umschalt-Relais, demjenigen Motor, welcher häufiger oder für längere Betriebszeiten verwendet wird. Dies kann die Betätigung bzw. die Bestromung des Umschalters minimieren.

Gemäß einem weiteren Aspekt der Erfindung weist das Antriebssystem eine Steuerungseinheit auf, welche ausgebildet ist, die erste Halbbrücke, die zweite Halbbrücke und die dritte Halbbrücke zu betreiben. Somit kann auch hinsichtlich der Umsetzung der Steuerung der Halbbrücken bzw. des Frequenzumrichters der Aufwand etc. reduziert werden, indem alle drei Halbbrücken von einer gemeinsamen Steuerungseinheit betrieben bzw. gesteuert werden können.

Gemäß einem weiteren Aspekt der Erfindung ist die Steuerungseinheit ausgebildet, entweder mittels der ersten Halbbrücke, der zweiten Halbbrücke und der dritten Halbbrücke den Dreiphasen-Motor oder mittels der ersten Halbbrücke und der dritten Halbbrücke den Einphasen-Motor zu betreiben. Dies kann eine konkrete Umsetzung darstellen.

Gemäß einem weiteren Aspekt der Erfindung weist die erste Halbbrücke eine erste Strommesseinrichtung, vorzugweise einen ersten Messwiderstand, aufweist, die zweite Halbbrücke eine zweite Strommesseinrichtung, vorzugweise einen zweiten Messwiderstand, aufweist und die dritte Halbbrücke eine dritte Strommesseinrichtung, vorzugweise einen dritten Messwiderstand, aufweist. Dies kann es ermöglichen, die Ströme der jeweiligen Halbbrücken bzw. des Frequenzumrichters im Betrieb, insbesondere seitens der Steuerungseinheit, zu erfassen und beispielsweise zur Regelung des jeweiligen Motors zu verwenden.

Gemäß einem weiteren Aspekt der Erfindung ist die Steuerungseinheit ausgebildet, entweder den ersten Messwiderstand, den zweiten Messwiderstand und den dritten Messwiderstand zur Strommessung und zur Regelung des Dreiphasen-Motors oder den ersten Messwiderstand und den dritten Messwiderstand zur Strommessung und zur Regelung des Einphasen-Motors zu verwenden. Hierdurch können der erste und der dritte Messwiderstand, vergleichbar der ersten und zweiten Halbbrücke, sowohl zum Betrieb des Dreiphasen-Motors als auch zum Betrieb des Einphasen-Motors verwendet werden.

Gemäß einem weiteren Aspekt der Erfindung wird im Betrieb des Dreiphasen-Motors nur mittels der zweiten Halbbrücke und der dritten Halbbrücke und des Einphasen-Motors mit der ersten Halbbrücke der Strom durch den Einphasen-Motor über die Strommesseinrichtung, der Strom durch den Dreiphasen-Motor über die Strommesseinrichtung und die Summe der Motorströme durch den Einphasen-Motor und den Dreiphasen-Motor über die Strommesseinrichtung gemessen.

Gemäß einem weiteren Aspekt der Erfindung weist das Antriebssystem einen Gleichrichter auf, welcher ausgebildet ist, eine Wechselspannung eines Spannungseingangs des Antriebssystems zu erhalten und eine Gleichspannung der ersten Halbbrücke, der zweiten Halbbrücke und der dritten Halbbrücke zur Verfügung zu stellen. Hierdurch kann eine Umsetzung des Antriebssystems an einer Wechselspannung erfolgen.

Gemäß einem weiteren Aspekt der Erfindung weist das Antriebssystem einen Glättungskondensator auf, welcher ausgebildet ist, die Gleichspannung des Ausgangs des Gleichrichters zu glätten. Hierdurch kann eine Restwelligkeit der gleichgerichteten Wechselspannung reduziert werden.

Die Erfindung betrifft auch ein Haushaltsgerät, vorzugsweise eine Waschmaschine oder einen Geschirrspüler, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

Mit anderen Worten kann die erfindungsgemäße Verbesserung darin gesehen werden, dass es ermöglicht werden kann, sowohl einen 1-strängigen PMSM (Permanentmagnet-Synchronmotor) als auch einen 3-strängigen PMSM an einer gemeinsam genutzten B6-Brücke (Wechselrichter) zu betreiben. Dies kann insbesondere gleichzeitig erfolgen.

Dies bedeutet, dass eine bereits vorhandene B6-Brücke des 3-strängigen PMSMs zusätzlich einen 1-strängigen PMSM ansteuern kann und keine zusätzliche H-Brücke für den 1-strängigen PMSM benötigt wird. Für die "Zuschaltung" des 1-strängigen PMSM an die B6-Brücke des 3-strängigen PMSM wird lediglich ein 1-poliges Umschaltrelais benötigt. Dies könnte beispielsweise zum Betreiben einer geregelten 1-strängigen Laugenpumpe in einem Geschirrspülautomaten zur Anwendung kommen.

Im Vergleich mit einem ungeregelten Motor für die Laugenpumpe, der mit einem Relais schaltbar am starren Netz betrieben würde und der in herkömmlicher Weise zusätzlich zum dreiphasigen Motor und der B6-Brücke vorgesehen wäre, kann dies somit zumindest im Wesentlichen kostenneutral erfolgen, wobei aber die mögliche Regelbarkeit als Vorteil erzielt wird.

In jedem Fall können hierdurch die besseren Eigenschaften (Drehzahlvariabel, Sensierung der Last, keine oder reduzierte Anzahl von Ländervarianten, bessere Akustik, höherer Wirkungsgrad) des Einsatzes eines geregelten 1-strängigen PMSM genutzt werden, ohne den bisher bekannten entsprechenden Aufwand (z.B. zusätzliche H-Brücke) hierfür zu betreiben.

Der 1-strängige PMSM und der 3-strängige PMSM können auch gleichzeitig, d.h. parallel zueinander, betrieben werden, so dass die Nutzung von Merkmalen des Umrichterbetriebs für beide Antriebe gleichzeitig möglich ist.

Somit kann an einer B6-Brücke zum einen ein 3-strängiger PMSM, beispielsweise als Hauptantrieb z.B. einer Geschirrspülerpumpe, und zum anderen ein 1-strängiger PMSM, beispielsweise als Hilfsantrieb z.B. eines Gebläses oder einer Laugenpumpe, betrieben werden.

Der Betrieb kann gleichzeitig erfolgen, obwohl mittels eines Relais (1-poliger Umschalter) zwischen den beiden Antrieben umgeschaltet werden kann. Dies geschieht über ein spezielles Ansteuerungsverfahren für den 3-strängigen PMSM, welcher dann mit nur zwei Phasen betrieben wird.

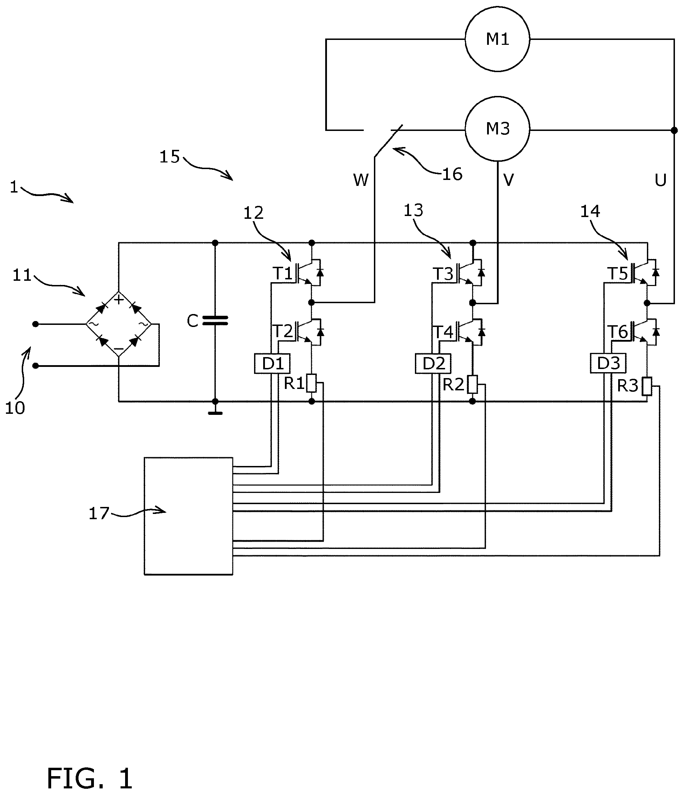

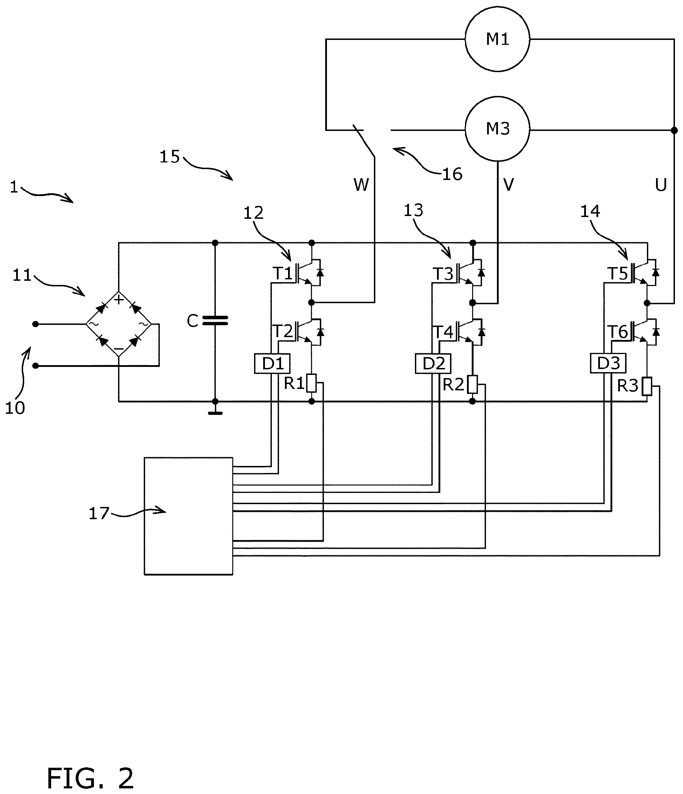

Zusammengefasst ergeben sich die folgenden, unterschiedlichen Konstellationen der Betriebszustände der beiden Motoren:
1. Beide Motoren sind abgeschaltet. Wenn beide Motoren abgeschaltet sind, wird keine Halbbrücke der B6-Endstufe getaktet. Die Stellung des Umschalt-Relais ist hierbei irrelevant.
2. Der 3-strängige Motor wird angesteuert und der 1-strängige Motor ist abgeschaltet. Wenn der 3-strängige Motor angesteuert wird, sind alle drei Halbbrücken in Betrieb. In der Regel kann mit einem Modulationsverfahren ein Drehfeld für den Antriebsmotor erzeugt werden. Das Relais befindet sich hier in der in Fig. 1 gezeigten Stellung.
   Der Betrieb des 3-strängigen PMSM kann in der Regel mittels feldorientierter Regelung erfolgen. Hierbei fließt elektrischer Strom in allen drei Phasen und Wicklungssträngen. Es werden in der Regel sinusförmige Größen (Spannungen, Ströme) eingeprägt. Alternativ kann der Motor als Brushless-DC BLDC betrieben werden. Hierbei sind immer nur zwei Wicklungsstränge gleichzeitig bestromt.
3. Der 3-strängige Motor ist abgeschaltet und der 1-strängige Motor ist angesteuert. Wenn der 1-strängige Antrieb in Betrieb ist, werden nur zwei der vorhandenen drei Halbbrücken des Umrichters angesteuert. Hierdurch kann die für den Betrieb des 1-strängigen PMSM benötige Wechselspannung mit einstellbarer Frequenz und Spannung moduliert werden. Anlauf, Hochlauf und der anschließende Betrieb können wie bekannt erfolgen. Das Relais befindet sich hier in der in Fig. 2 gezeigten Stellung.
4. Sowohl der 3-strängige Motor als auch der 1-einsträngige Motor sind gleichzeitig angesteuert. Durch den Einsatz eines neuen Verfahrens, welches hier beschrieben wird, ist es möglich, sowohl den 3-strängigen als auch den 1-strängigen PMSM gleichzeitig zu betreiben. Das Relais befindet sich hier in der in Fig. 2 gezeigten Stellung.

In jedem Fall kann die Relais-Position für die Bestromung des 1- oder 3-strängigen Antriebs insofern "sinnvoll" gewählt werden, als dass die Ruhelage des Relais für den Antrieb ausgewählt wird, der länger oder häufiger betrieben wird (abhängig von der Anwendung). Damit soll die Anzahl von Schaltungen des Relais und/oder der Stromverbrauch des Relais vermindert bzw. minimiert werden. Bevorzugt entspricht die in Fig. 1 gezeigte Stellung des Relais der Ruhelage und die in Fig. 2 gezeigte Stellung der angesteuerten Stellung.

Der Anlauf des 3-strängigen PMSM mit Bestromung auf nur zwei Wicklungssträngen kann derart erfolgen, dass die Betriebszustände mit dem folgenden möglichen Ablauf umgeschaltet werden können. Da es bei der 2-strängigen Bestromung des 3-strängigen PMSM bestimmte Rotorlagen gibt, bei denen kein Drehmoment (elektrisches Moment) erzeugt werden kann, ist der Anlauf des Motors aus dem Stillstand bei 2-strängiger Bestromung als kritisch anzusehen. Die Erzeugung von Spannungsvektoren mit zwei Phasen des Motors, verbunden an einer H-Brücke, ist in der Amplitude frei aber im Winkel nur auf +150° und -30° möglich (wenn, wie in diesem Beispiel beschrieben, die Phase W der ersten Halbbrücke nicht am 3-strängigen PMSM M3 angeschlossen ist, siehe Figur 2). Durch diese Einschränkung des Winkels des Spannungsvektors ist ein Anlaufen des Motors mit einer H-Brücke aus den Positionen +150° und -30° nicht möglich.

Daher wird vorgeschlagen, den 3-strängigen PMSM zum Starten erst einmal 3-strängig zu bestromen und so bis auf eine bestimmte Drehzahl zu beschleunigen, bevor das neue Verfahren wie folgt einsetzt (und ggf. das Relais umschaltet):
1. Ein konkreter möglicher Ablauf kann sein, zunächst ein Hochlaufen des 3-strängigen PMSM nach bekannten Verfahren mit drei Wicklungssträngen, in der Regel bestehend aus dem Ausrichten des Rotors, aus einem gesteuerten Anlauf bis zur Anlaufdrehzahl und dann einem Umschalten in den geregelten Betrieb mit Rotorlage-Feedback, durchzuführen. Hierbei kann eine feldorientierte Regelung verwendet werden.
   Es sind auch alternative Verfahren denkbar, etwa ein geregelter Anlauf mit geregeltem Betrieb aus Drehzahl Null heraus. Wichtig ist lediglich, dass der Rotor des Motors eine ausreichend große kinetische Energie aufgenommen hat, um die Rotorlagen, in denen nach dem Umschalten zum neuen Verfahren kein elektrisches Moment erzeugt werden kann, zu "überbrücken".
2. Anschließend kann ein Anfahren bzw. ein Einstellen einer "reduzierten Drehzahl" erfolgen, welche eine geringere Umrichter-Ausgangsspannung benötigt, z.B. 50% oder 30% der maximalen Ausgansspannung des Umrichters, auf welche die Wicklung des Motors in der Regel ausgelegt wurde.
3. In einem dritten Schritt kann ein Umschalten des Modulationsverfahrens erfolgen. Hierbei kann die Motorphase W gar nicht mehr oder nach einem speziellen Verfahren getaktet werden. Der elektrische Strom in Phase W des Umrichters soll gegen Null gehen. Der 3-strängige PMSM wird nun mit nur zwei aktiven Wicklungssträngen betrieben. Dies kann mittels eines besonderen Verfahrens erfolgen.
4. Anschließend, nachdem die Phase W stromlos ist oder die Stromstärke in Phase W einen unteren Schwellwert unterschritten hat, kann das Relais umgeschaltet werden. Diese Vorgehensweise "schont" die Relaiskontakte. Auch das Schalten unter Stromfluss ist grundsätzlich möglich.
5. Der 1-strängige PMSM kann nun zusätzlich betrieben werden. Dabei können alle bekannten Verfahren (z.B. gesteuerter Betrieb, Regelbetrieb mit Rotorlage-Sensor, Regelbetrieb mit Rotorlage-Feedback basierend auf der EMK, Beobachter, usw.) genutzt werden.
   Eine Einschränkung kann hier ebenfalls die sich durch den gleichzeitigen Betrieb beider Motoren ergebende, reduzierte, maximale Umrichterausgangsspannung darstellen. Dies kann ggf. durch "passende" Auslegung des Motors bzw. der Motoren (zumindest teilweise) kompensiert werden. Zudem kann verfahrenstechnisch darauf Rücksicht genommen werden, indem diese neue Betriebsart nur in Programmschritten durchgeführt wird, bei denen dem 3-strängigen PMSM nicht die volle Leistungsfähigkeit (z.B. Abtriebs-Drehmoment oder Drehzahl) abverlangt wird.

Ein Ausführungsbeispiel der Erfindung ist in den Zeichnungen rein schematisch dargestellt und wird nachfolgend näher beschrieben. Es zeigt
- Figur 1: ein Schaltungsbild eines erfindungsgemäßen Antriebssystems zum Betreiben des Dreiphasen-Motors;
- Figur 2: ein Schaltungsbild des erfindungsgemäßen Antriebssystems zum Betreiben des Einphasen-Motors oder zum Betreiben des Einphasen-Motors gleichzeitig mit dem Dreiphasen-Motor mit speziellem Ansteuerungsverfahren für den Dreiphasen-Motor, welcher dann mit nur zwei Phasen betrieben wird; und
- Figur 3: ein Vektordiagramm des Statorstroms und des Rotorflusses bei zwei-strängiger Bestromung des Dreiphasen-Motors.

Es ist bekannt, ein Antriebssystem 1 über einen Spannungseingang 10 an einer Wechselspannung zu betreiben, indem die Wechselspannung des Spannungseingangs 10 über einen Gleichrichter 11 in eine Gleichspannung gewandelt und dann mittels eines Glättungskondensators C geglättet wird.

Die geglättete Gleichspannung wird nun parallel an eine erste Halbbrücke 12, an eine zweite Halbbrücke 13 und an eine dritte Halbbrücke 14 gelegt, welche gemeinsam einen Frequenzumrichter 15 bilden. Die erste Halbbrücke 12 weist einen ersten Leistungshalbleiter T1, einen zweiten Leistungshalbleiter T2, einen ersten Treiber D1 und einen ersten Messwiderstand R1 als ersten Shunt R1 auf. Die zweite Halbbrücke 13 weist einen dritten Leistungshalbleiter T3, einen vierten Leistungshalbleiter T4, einen zweiten Treiber D2 und einen zweiten Messwiderstand R2 als zweiten Shunt R2 auf. Die dritte Halbbrücke 14 weist einen fünften Leistungshalbleiter T5, einen sechsten Leistungshalbleiter T6, einen dritten Treiber D3 und einen dritten Messwiderstand R3 als dritten Shunt R3 auf.

Es ist ein Dreiphasen-Motor M3 als Dreiphasen-Synchronmotor M3 vorgesehen, welcher direkt bzw. fest mit der zweiten Halbbrücke 13 und mit der dritten Halbbrücke 14 verbunden ist. Es ist ferner ein Einphasen-Motor M1 vorhanden, welcher ebenfalls direkt bzw. fest mit der dritten Halbbrücke 14 verbunden ist, jedoch nicht mit der zweiten Halbbrücke 13. Sowohl der Dreiphasen-Motor M3 als auch der Einphasen-Motor M1 sind indirekt über einen Umschalter 16, z.B. in Form eines Umschalt-Relais 16, mit der ersten Halbbrücke 12 verbunden, so dass durch Umschalten des Umschalters 16 entweder der Dreiphasen-Motor M3, siehe Figur 1, oder der Einphasen-Motor M1, siehe Figur 2, mit der ersten Halbbrücke 12 verbunden ist. Entsprechend kann durch das Umschalten des Umschalters 16 entweder der Dreiphasen-Motor M3 oder der Einphasen-Motor M1 vom Frequenzumrichter 15 betrieben werden.

Es ist ferner möglich, den Dreiphasen-Motor M3 und den Einphasen-Motor M1 gleichzeitig, d.h. parallel zueinander, zu betreiben, indem mittels des Umschalters 16 der EinphasenMotor M1 mit der ersten Halbbrücke 12 verbunden wird, siehe Figur 2. Zum Erreichen dieses Betriebsfalls wird der Dreiphasen-Motor M3 zunächst wie bisher bekannt betrieben und mit allen drei Halbbrücken 12, 13 und 14 verbunden, siehe Figur 1. Ist eine ausreichend schnelle Rotation des Rotors des Dreiphasen-Motors M3 erreicht, so dass Winkellagen des Stromoder Flussvektors des Dreiphasen-Motors M3, in denen ein Anlaufen des Dreiphasen-Motors M3 mit lediglich nur zwei Phasen nicht möglich ist, überwunden werden können, was auch Hochlauf bezeichnet werden kann, so wird die Drehzahl des Dreiphasen-Motors M3 auf etwa die Hälfte der Nenndrehzahl reduziert. Nun kann mittels des Umschalters 16 der EinphasenMotor M1 mit der ersten Halbbrücke 12 verbunden werden, siehe Figur 2, so dass dessen paralleler Betrieb erfolgen kann, während der Dreiphasen-Motor M3 nur mittels der zweiten Halbbrücke 13 und der dritten Halbbrücke 14 mit gegenüber der Nenndrehzahl reduzierter Drehzahl und/oder gegenüber der Nennleistung reduzierter Leistung weiter betrieben wird.

Um den Frequenzumrichter 15 bzw. dessen Halbbrücken 12, 13, 14 entsprechend anzusteuern, ist eine Steuerungseinheit 17 in Form eines Rechners 17 über die drei Treiber D1, D2, D3 jeweils mit den sechs Leistungshalbleitern T1-T6 verbunden. Auch sind die drei Messwiderstände R1, R2, R3 mit der Steuerungseinheit 17 verbunden, so dass im Betrieb die Ströme im Dreiphasen-Motor M3 sowie im Einphasen-Motor M1 erfasst und der Dreiphasen-Motor M3 sowie der Einphasen-Motor M1 hierauf basierend von der Steuerungseinheit 17 geregelt betrieben werden können.

In der oben beschriebenen Konstellationen der Betriebszustände Nr. 5, bei welcher der Betrieb des Einphasen-Motors gleichzeitig mit dem Dreiphasen-Motor mit speziellem Ansteuerungsverfahren für den Dreiphasen-Motor (Betrieb mit nur zwei Phasen) erfolgt, setzen sich die mittels der Messwiderstände R1, R2, R3 erfassten Motorströme wie folgt zusammen: Messung des Stroms durch Motor M1 (I_M1) über Messwiderstand R1, Messung des Stroms durch Motor M3 (I_M3) über Messwiderstand R2 und Messung der Summe der Ströme durch die Motoren M1 und M3 über Messwiderstand R3.

Der Dreiphasen-Motor M3 kann ein Hauptantrieb und der Einphasen-Motor M1 ein Hilfsantrieb eines Haushaltsgeräts sein. Entsprechend kann der Umschalter 16 als UmschaltRelais 16 im Ruhezustand den Dreiphasen-Motor M3 als Hauptantrieb mit der ersten Halbbrücke 12 verbinden, da der Dreiphasen-Motor M3 als Hauptantrieb häufiger betrieben wird als der Einphasen-Motor M1 als Hilfsantrieb.

In jedem Fall können die Vorteile des Betreibens eines elektrischen Motor M1, M3 mittels des Frequenzumrichters 15 sowohl bei dem Dreiphasen-Motor M3 als auch bei dem EinphasenMotor M1 genutzt werden, insbesondere die Vorteile eines jeweiligen geregelten Betreibens. Gleichzeitig kann der schaltungstechnische Aufwand hierfür sowie die Herstellungskosten, der Platzbedarf, der Energieverbrauch sowie die Wärmeabgabe des Antriebssystems 1 geringgehalten werden.

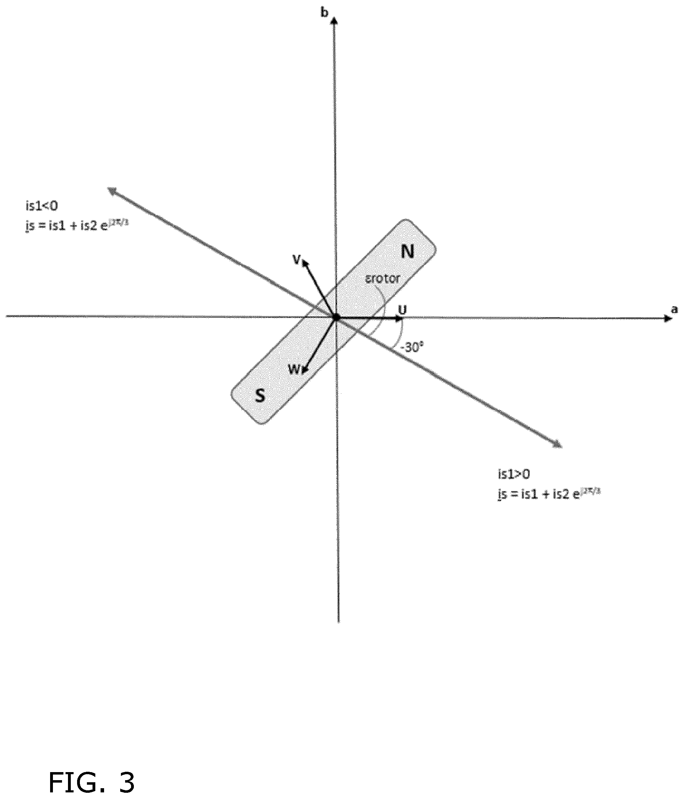

Figur 3 zeigt ein Vektordiagramm des Statorstroms und des Rotorflusses bei zwei-strängiger Bestromung des Dreiphasen-Motors M3. Figur 2 zeigt die entsprechende mögliche Ansteuerung des Dreiphasen-Motors M3 bei Bestromung nur den beiden Wicklungsstränge U und V. Durch den Wegfall der Bestromung des dritten Wicklungsstranges W entfällt praktisch der Sternpunkt.

Für den Fall, dass der Sternpunkt des Dreiphasen-Motors M3 nicht nach Außen geführt ist, ergibt sich folgender, einfacher Zusammenhang zwischen den beiden Strangströmen Is1 (Motorphase U) und Is2 (Motorphase V): $is 1 = - is 2$

Durch diese Einschränkung wird ebenfalls der Vektor des Statorstroms is, in der Figur 3 als Linie mit Doppelpfeilenden dargestellt, und der daraus resultierende Statorflussvektor ψ_{S} wie folgt beschränkt: $\left|{φ}_{{ψ}_{_} s}=-30°\right| is 1 > 0$ $\left|{φ}_{{ψ}_{_} s}=150°\right| is 1 < 0$

Die Erzeugung von Spannungsvektoren mit zwei Phasen, also zwei Wicklungssträngen des Dreiphasen-Motors M3, verbunden an einer H-Brücke (Frequenzumrichter mit zwei Phasen) ist in der Amplitude frei aber im Winkel nur auf +150° und -30° möglich (wenn Phase W wie in diesem Beispiel nicht angeschlossen ist). Das schränkt ebenfalls den Winkel des Strom-, bzw. Statorflussvektors ein. Bei der Kommutierung wird dann lediglich die Stromrichtung in den beiden aktiven Wicklungssträngen U und V umgekehrt.

Für die Drehzahlregelung wird die Amplitude des Spannungszeigers beeinflusst (Stellgröße = Ausgangsgröße des Drehzahlreglers), was wiederum die Amplitude des Statorstromzeigers *i* beeinflusst. Dadurch wird die Amplitude des magnetischen Flusszeigers im Stator *ψ_{S}* verändert, was zur Veränderung des elektrischen Moments führt.

Es ergibt sich daher folgender Zusammenhang zwischen dem elektrischen Moment der Maschine, dem Flusszeiger des Rotors und der Bestromung des Stators: ${M}_{el} = {{ψ}_{_}}_{F} \times {{i}_{_}}_{s}$ ${M}_{el} = - {ψ}_{F} ⋅ {i}_{s} ⋅ sin \left({ε}_{Rotor}+30°\right)$

Daraus folgt, dass die Stromrichtung im Stator (Figur 3: Linien mit Doppelpfeilenden) immer in Abhängigkeit der Rotorlage (Figur 3: Rechteck) "umgeschaltet" werden muss. $- 30 ° < {ε}_{Rotor} < 150 ° \to is 1 < 0 \to M > 0$ $150 ° < {ε}_{Rotor} < 330 ° \to is 1 > 0 \to M > 0$

Aufgrund der Tatsache, dass kein rotierender Raumzeiger eingeprägt werden kann (kein kontinuierliches Drehfeld möglich), entstehen Kombinationen aus Rotorlage und StatorflussVektor, bei denen Minima und Maxima im elektrischen Moment entstehen. Diese sog. Drehmomenten-Ripple können Körperschall induzieren und damit akustisch kritisch sein.

Wie oben zu sehen wird die Amplitude des Strom- bzw. Flusszeigers dazu verwendet, dass elektrische Moment der Maschine zu beeinflussen. Hierbei beschleunigen größere Drehmomente und verzögern geringere Drehmomente den Antrieb bei gegebener (konstanter) Last.

Daher ist es denkbar, die Amplitude des Strom- bzw. Flusszeigers in genau solch einer Art und Weise zu beeinflussen, dass die Drehmoment-Ripple des 2-strängig betriebenen Dreiphasen-Motors M3 reduziert werden können. Die verkettete Umrichterausgangsspannung sowie der Strangstrom is1 (= -is2) sind dann ggf. keine sinusförmigen Größen mehr, oder zumindest sinusförmige Größen mit eingeprägten Oberwellen. Dies wird durch entsprechend modifizierte Modulationsverfahren realisiert.

### Bezugszeichenliste (Bestandteil der Beschreibung)

- C: Glättungskondensator
- D1: Erster Treiber
- D2: Zweiter Treiber
- D3: Dritter Treiber
- Is1: Erster Strangstrom des Dreiphasen-Motors M3
- Is2: Zweiter Strangstrom des Dreiphasen-Motors M3
- M1: Einphasen-(Synchron-)Motor
- M3: Dreiphasen-(Synchron-)Motor
- R1-R3: Messwiderstände; Shunts
- T1-T6: Leistungshalbleiter
- U: Motorphase U
- V: Motorphase V
- W: Motorphase W

- 1: Antriebssystem
- 10: Spannungseingang
- 11: Gleichrichter
- 12: Erste Halbbrücke
- 13: Zweite Halbbrücke
- 14: Dritte Halbbrücke
- 15: Frequenzumrichter
- 16: Umschalter; Umschalt-Relais
- 17: Steuerungseinheit; Rechner

## Patentansprüche

1. Antriebssystem (1)
mit wenigstens einem Dreiphasen-Synchronmotor (M3), und
mit wenigstens einem Frequenzumrichter (15) mit einer ersten Halbbrücke (12), einer zweiten Halbbrücke (13) und einer dritten Halbbrücke (14),
wobei der Frequenzumrichter (15) ausgebildet ist, den Dreiphasen-Motor (M3) mittels aller drei Halbbrücken (12, 13, 14) zu betreiben,
**dadurch gekennzeichnet, dass**
der Frequenzumrichter (15) ferner ausgebildet ist, den Dreiphasen-Motor (M3) nur mittels der zweiten Halbbrücke (13) und der dritten Halbbrücke (14) zu betreiben,
wobei der Frequenzumrichter (15) ausgebildet ist,
• den Dreiphasen-Motor (M3) im Hochlauf mittels aller drei Halbbrücken (12, 13, 14) zu betreiben und,
nach Abschluss des Hochlaufs, den Dreiphasen-Motor (M3) nur mittels der zweiten Halbbrücke (13) und der dritten Halbbrücke (14) zu betreiben.

2. Antriebssystem (1) nach Anspruch 1,
wobei nach Abschluss des Hochlaufs des Dreiphasen-Motors (M3) mittels aller drei Halbbrücken (12, 13, 14) und vor dem Betreiben des Dreiphasen-Motors (M3) nur mittels der zweiten Halbbrücke (13) und der dritten Halbbrücke (14) ein Betreiben des Dreiphasen-Motors (M3) mittels aller drei Halbbrücken (12, 13, 14) mit einer geringeren Spannung des Frequenzumrichters (15) als beim Hochlauf, unmittelbar nach dem Hochlauf oder im Nennbetrieb des Dreiphasen-Motors (M3) mittels aller drei Halbbrücken (12, 13, 14) erfolgt.

3. Antriebssystem (1) nach Anspruch 1 oder 2,
wobei der Abschluss des Hochlaufs vorliegt, falls wenigstens eine vorbestimmte Drehzahl oder eine vorbestimmte Drehgeschwindigkeit des Dreiphasen-Motors (M3) erreicht oder eine vorbestimmte Zeitdauer überschritten ist.

4. Antriebssystem (1) nach einem der vorangehenden Ansprüche,
ferner mit wenigstens einem Einphasen-Motor (M1), vorzugsweise einem Einphasen-Synchronmotor (M1),
wobei der Frequenzumrichter (15) ferner ausgebildet ist, den Einphasen-Motor (M1) mittels der ersten Halbbrücke (12) und der dritten Halbbrücke (14) alternativ oder zusätzlich zum Dreiphasen-Motor (M3) zu betreiben,
wobei die erste Halbbrücke (12) mittels eines Umschalters (16), vorzugsweise mittels eines Umschalt-Relais (16), zwischen dem Dreiphasen-Motor (M3) und dem EinphasenMotor (M1) umgeschaltet werden kann und
wobei die dritte Halbbrücke (14) sowohl mit dem Dreiphasen-Motor (M3) als auch mit dem Einphasen-Motor (M1) verbunden ist.

5. Antriebssystem (1) nach Anspruch 4,
wobei ein zusätzliches Betreiben vom Einphasen-Motor (M1) zum Dreiphasen-Motor (M3) erst bei Betreiben des Dreiphasen-Motors (M3) nur mittels der zweiten Halbbrücke (13) und der dritten Halbbrücke (14) erfolgt.

6. Antriebssystem (1) nach Anspruch 5,
wobei die zweite Halbbrücke (13) nur mit dem Dreiphasen-Motor (M3) verbunden ist.

7. Antriebssystem (1) nach Anspruch 5 oder 6,
wobei die Ruhestellung des Umschalters (16), vorzugsweise des Umschalt-Relais (16), demjenigen Motor (M1, M3) entspricht, welcher häufiger oder für längere Betriebszeiten verwendet wird.

8. Antriebssystem (1) nach einem der vorangehenden Ansprüche, **gekennzeichnet durch**
eine Steuerungseinheit (17), welche ausgebildet ist, die erste Halbbrücke (12), die zweite Halbbrücke (13) und die dritte Halbbrücke (14) zu betreiben.

9. Antriebssystem (1) nach Anspruch 8, **dadurch gekennzeichnet, dass**
die Steuerungseinheit (17) ausgebildet ist, entweder
• mittels der ersten Halbbrücke (12), der zweiten Halbbrücke (13) und der dritten Halbbrücke (14) den Dreiphasen-Motor (M3) oder
• mittels der ersten Halbbrücke (12) und der dritten Halbbrücke (14) den Einphasen-Motor (M1)
zu betreiben.

10. Antriebssystem (1) nach einem der Ansprüche 5 bis 9, **dadurch gekennzeichnet, dass**
die erste Halbbrücke (12) eine erste Strommesseinrichtung (R1), vorzugweise einen ersten Messwiderstand, aufweist,
die zweite Halbbrücke (13) eine zweite Strommesseinrichtung (R2), vorzugweise einen zweiten Messwiderstand, aufweist und
die dritte Halbbrücke (14) eine dritte Strommesseinrichtung (R3), vorzugweise einen dritten Messwiderstand, aufweist.

11. Antriebssystem (1) nach Anspruch 10, **dadurch gekennzeichnet, dass**
die Steuerungseinheit (17) ausgebildet ist, entweder
• die erste Strommesseinrichtung (R1), die zweite Strommesseinrichtung (R2) und die dritte Strommesseinrichtung (R3) zur Strommessung und zur Regelung des Dreiphasen-Motors (M3), oder
• die erste Strommesseinrichtung (R1) und die dritte Strommesseinrichtung (R3) zur Strommessung und zur Regelung des Einphasen-Motors (M1)
zu verwenden.

12. Antriebssystem (1) Anspruch 10 oder 11, wobei im Betrieb des Dreiphasen-Motors (M3) nur mittels der zweiten Halbbrücke (13) und der dritten Halbbrücke (14) und des Einphasen-Motors (M1) mit der ersten Halbbrücke (12) der Strom durch den EinphasenMotor (M1) über die Strommesseinrichtung (R1), der Strom durch den Dreiphasen-Motor (M3) über die Strommesseinrichtung (R2) und die Summe der Motorströme durch den Einphasen-Motor (M1) und den Dreiphasen-Motor (M3) über die Strommesseinrichtung (R3) gemessen wird.

13. Antriebssystem (1) nach einem der vorangehenden Ansprüche, **gekennzeichnet durch**
einen Gleichrichter (11), welcher ausgebildet ist, eine Wechselspannung eines Spannungseingangs (10) des Antriebssystems (1) zu erhalten und eine Gleichspannung der ersten Halbbrücke (12), der zweiten Halbbrücke (13) und der dritten Halbbrücke (14) zur Verfügung zu stellen.

14. Haushaltsgerät, vorzugsweise Waschmaschine oder Geschirrspüler,
mit wenigstens einem Antriebssystem (1) nach einem der vorangehenden Ansprüche.

## Claims

1. Drive system (1)
comprising at least one three-phase synchronous motor (M3), and
comprising at least one frequency converter (15) having a first half-bridge (12), a second half-bridge (13) and a third half-bridge (14),
the frequency converter (15) being designed to operate the three-phase motor (M3) by means of all three half-bridges (12, 13, 14),
**characterised in that**
the frequency converter (15) is further designed to operate the three-phase motor (M3) only by means of the second half-bridge (13) and the third half-bridge (14),
the frequency converter (15) being designed
• to operate the three-phase motor (M3) during start-up by means of all three half-bridges (12, 13, 14) and,
after start-up is complete, to operate the three-phase motor (M3) only by means of the second half-bridge (13) and the third half-bridge (14).

2. Drive system (1) according to claim 1,
wherein, after start-up of the three-phase motor (M3) by means of all three half-bridges (12, 13, 14) is complete and before the operation of the three-phase motor (M3) only by means of the second half-bridge (13) and the third half-bridge (14), the three-phase motor (M3) is operated by means of all three half-bridges (12, 13, 14) with a lower voltage of the frequency converter (15) than during start-up, immediately after start-up or in nominal operation of the three-phase motor (M3) by means of all three half-bridges (12, 13, 14).

3. Drive system (1) according to claim 1 or 2,
wherein start-up is complete if at least a predetermined rotational speed or a predetermined rotational velocity of the three-phase motor (M3) is reached or a predetermined duration is exceeded.

4. Drive system (1) according to any of the preceding claims,
further comprising at least one single-phase motor (M1), preferably a single-phase synchronous motor (M1),
wherein the frequency converter (15) is further designed to operate the single-phase motor (M1) by means of the first half-bridge (12) and the third half-bridge (14) alternatively or in addition to the three-phase motor (M3),
wherein the first half-bridge (12) can be switched between the three-phase motor (M3) and the single-phase motor (M1) by means of a changeover switch (16), preferably by means of a changeover relay (16) and
wherein the third half-bridge (14) is connected to both the three-phase motor (M3) and the single-phase motor (M1).

5. Drive system (1) according to claim 4,
wherein the single-phase motor (M1) is operated in addition to the three-phase motor (M3) only when the three-phase motor (M3) is operated only by means of the second half-bridge (13) and the third half-bridge (14).

6. Drive system (1) according to claim 5,
wherein the second half-bridge (13) is connected only to the three-phase motor (M3).

7. Drive system (1) according to claim 5 or 6,
wherein the rest position of the changeover switch (16), preferably the changeover relay (16), corresponds to the motor (M1, M3) which is used more frequently or for longer operating times.

8. Drive system (1) according to any of the preceding claims,
**characterised by**
a control unit (17) which is designed to operate the first half-bridge (12), the second half-bridge (13) and the third half-bridge (14).

9. Drive system (1) according to claim 8, **characterised in that**
the control unit (17) is designed to operate either
• the three-phase motor (M3) by means of the first half-bridge (12), the second half-bridge (13) and the third half-bridge (14) or
• the single-phase motor (M1) by means of the first half-bridge (12) and the third half-bridge (14).

10. Drive system (1) according to any of claims 5 to 9, **characterised in that**
the first half-bridge (12) comprises a first current measuring device (R1), preferably a first measuring resistor,
the second half-bridge (13) comprises a second current measuring device (R2), preferably a second measuring resistor, and
the third half-bridge (14) comprises a third current measuring device (R3), preferably a third measuring resistor.

11. Drive system (1) according to claim 10, **characterised in that**
the control unit (17) is designed to use either
• the first current measuring device (R1), the second current measuring device (R2) and the third current measuring device (R3) for current measurement and for control of the three-phase motor (M3), or
• the first current measuring device (R1) and the third current measuring device (R3) for current measurement and for control of the single-phase motor (M1).

12. Drive system (1) claim 10 or 11, wherein, during operation of the three-phase motor (M3) only by means of the second half-bridge (13) and the third half-bridge (14) and of the single-phase motor (M1) with the first half-bridge (12), the current through the single-phase motor (M1) is measured via the current measuring device (R1), the current through the three-phase motor (M3) is measured via the current measuring device (R2) and the sum of the motor currents through the single-phase motor (M1) and the three-phase motor (M3) is measured via the current measuring device (R3).

13. Drive system (1) according to any of the preceding claims,
**characterised by**
a rectifier (11) which is designed to receive an alternating voltage from a voltage input (10) of the drive system (1) and to provide a direct voltage to the first half-bridge (12), the second half-bridge (13) and the third half-bridge (14).

14. Household appliance, preferably a washing machine or a dishwasher,
comprising at least one drive system (1) according to any of the preceding claims.

## Revendications

1. Système d'entraînement (1)
comportant au moins un moteur synchrone triphasé (M3), et
comportant au moins un convertisseur de fréquence (15) comportant un premier demi-pont (12), un deuxième demi-pont (13) et un troisième demi-pont (14),
dans lequel le convertisseur de fréquence (15) est configuré pour faire fonctionner le moteur triphasé (M3) au moyen des trois demi-ponts (12, 13, 14),
**caractérisé en ce que**
le convertisseur de fréquence (15) est en outre configuré pour faire fonctionner le moteur triphasé (M3) uniquement au moyen du deuxième demi-pont (13) et du troisième demi-pont (14),
dans lequel le convertisseur de fréquence (15) est configuré pour
• faire fonctionner le moteur triphasé (M3) lors de la montée en régime au moyen des trois demi-ponts (12, 13, 14), et
après l'achèvement de la montée en régime, faire fonctionner le moteur triphasé (M3) uniquement au moyen du deuxième demi-pont (13) et du troisième demi-pont (14).

2. Système d'entraînement (1) selon la revendication 1,
dans lequel, après l'achèvement de la montée en régime du moteur triphasé (M3) au moyen des trois demi-ponts (12, 13, 14) et avant le fonctionnement du moteur triphasé (M3) uniquement au moyen du deuxième demi-pont (13) et du troisième demi-pont (14), un fonctionnement du moteur triphasé (M3) au moyen des trois demi-ponts (12, 13, 14) est effectué avec une tension du convertisseur de fréquence (15) plus faible que lors de la montée en régime immédiatement après la montée en régime ou lors du fonctionnement nominal du moteur triphasé (M3) au moyen des trois demi-ponts (12, 13, 14).

3. Système d'entraînement (1) selon la revendication 1 ou 2,
dans lequel l'achèvement de la montée en régime a lieu si au moins une fréquence de rotation prédéterminée ou une vitesse de rotation prédéterminée du moteur triphasé (M3) est atteinte ou si une période de temps prédéterminée est dépassée.

4. Système d'entraînement (1) selon l'une des revendications précédentes,
comportant en outre au moins un moteur monophasé (M1), de préférence un moteur synchrone monophasé (M1),
dans lequel le convertisseur de fréquence (15) est en outre configuré pour faire fonctionner le moteur monophasé (M1) au moyen du premier demi-pont (12) et du troisième demi-pont (14) alternativement ou en plus du moteur triphasé (M3),
dans lequel le premier demi-pont (12) peut être commuté entre le moteur triphasé (M3) et le moteur monophasé (M1) au moyen d'un commutateur (16), de préférence au moyen d'un relais de commutation (16), et
dans lequel le troisième demi-pont (14) est connecté à la fois au moteur triphasé (M3) et au moteur monophasé (M1).

5. Système d'entraînement (1) selon la revendication 4,
dans lequel un fonctionnement supplémentaire du moteur monophasé (M1) au moteur triphasé (M3) est effectué seulement lors du fonctionnement du moteur triphasé (M3) uniquement au moyen du deuxième demi-pont (13) et du troisième demi-pont (14).

6. Système d'entraînement (1) selon la revendication 5,
dans lequel le deuxième demi-pont (13) est connecté uniquement au moteur triphasé (M3).

7. Système d'entraînement (1) selon la revendication 5 ou 6,
dans lequel la position de repos du commutateur (16), de préférence du relais de commutation (16), correspond au moteur (M1, M3) qui est utilisé plus fréquemment ou pour des temps de fonctionnement plus longs.

8. Système d'entraînement (1) selon l'une des revendications précédentes, **caractérisé par**
une unité de commande (17) qui est configurée pour faire fonctionner le premier demi-pont (12), le deuxième demi-pont (13) et le troisième demi-pont (14).

9. Système d'entraînement (1) selon la revendication 8, **caractérisé en ce que**
l'unité de commande (17) est configurée pour faire fonctionner
• au moyen du premier demi-pont (12), du deuxième demi-pont (13) et du troisième demi-pont (14), le moteur triphasé (M3), ou
• au moyen du premier demi-pont (12) et du troisième demi-pont (14), le moteur monophasé (M1).

10. Système d'entraînement (1) selon l'une des revendications 5 à 9,
**caractérisé en ce que**
le premier demi-pont (12) présente un premier dispositif de mesure de courant (R1), de préférence une première résistance de mesure,
le deuxième demi-pont (13) présente un deuxième dispositif de mesure de courant (R2), de préférence une deuxième résistance de mesure, et
le troisième demi-pont (14) présente un troisième dispositif de mesure de courant (R3), de préférence une troisième résistance de mesure.

11. Système d'entraînement (1) selon la revendication 10,
**caractérisé en ce que**
l'unité de commande (17) est configurée pour faire fonctionner
• le premier dispositif de mesure de courant (R1), le deuxième dispositif de mesure de courant (R2) et le troisième dispositif de mesure de courant (R3) pour la mesure de courant et pour la régulation du moteur triphasé (M3), ou
• le premier dispositif de mesure de courant (R1) et le troisième dispositif de mesure de courant (R3) pour la mesure de courant et pour la régulation du moteur monophasé (M1).

12. Système d'entraînement (1), revendication 10 ou 11, dans lequel, lors du fonctionnement du moteur triphasé (M3) uniquement au moyen du deuxième demi-pont (13) et du troisième demi-pont (14) et lors du fonctionnement du moteur monophasé (M1) avec le premier demi-pont (12), le courant traversant le moteur monophasé (M1) est mesuré par l'intermédiaire du dispositif de mesure de courant (R1), le courant traversant le moteur triphasé (M3) est mesuré par l'intermédiaire du dispositif de mesure de courant (R2) et la somme des courants de moteur traversant le moteur monophasé (M1) et le moteur triphasé (M3) est mesurée par l'intermédiaire du dispositif de mesure de courant (R3).

13. Système d'entraînement (1) selon l'une des revendications précédentes, **caractérisé par**
un redresseur (11) qui est configuré pour recevoir une tension alternative d'une entrée de tension (10) du système d'entraînement (1) et pour mettre à disposition une tension continue du premier demi-pont (12), du deuxième demi-pont (13) et du troisième demi-pont (14).

14. Appareil électroménager, de préférence lave-linge ou lave-vaisselle,
comportant au moins un système d'entraînement (1) selon l'une des revendications précédentes.
